(19) Europäisches Patentamt / European Patent Office / Office européen des brevets

(11) **EP 1 894 370 B1**

(12) **EUROPEAN PATENT SPECIFICATION**

(45) Date of publication and mention
of the grant of the patent:
**09.11.2011 Bulletin 2011/45**

(51) Int Cl.:
*H04L 12/64* (2006.01)   *H04J 3/06* (2006.01)
*G06F 1/04* (2006.01)

(21) Application number: **06756112.6**

(22) Date of filing: **12.06.2006**

(86) International application number:
**PCT/IB2006/051860**

(87) International publication number:
**WO 2006/134540 (21.12.2006 Gazette 2006/51)**

(54) **ELECTRONIC DEVICE, METHOD FOR FRAME SYNCHRONIZATION, AND MOBILE DEVICE**

ELEKTRONISCHE VORRICHTUNG, VERFAHREN ZUR RAHMENSYNCHRONISIERUNG UND MOBILE VORRICHTUNG

DISPOSITIF ELECTRONIQUE, PROCEDE DE SYNCHRONISATION DE TRAMES ET DISPOSITIF MOBILE

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(30) Priority: **13.06.2005 EP 05105166**
**13.09.2005 EP 05300744**

(43) Date of publication of application:
**05.03.2008 Bulletin 2008/10**

(73) Proprietor: **ST-Ericsson SA**
**1228 Genève Plan-les-Ouates (CH)**

(72) Inventors:
• **RADULESCU, Andrei**
**NL-5656 AA Eindhoven (NL)**
• **VAN DEN HAMER, Peter**
**NL-5656 AA Eindhoven (NL)**

(74) Representative: **Bird, William Edward et al**
**Bird Goën & Co**
**Klein Dalenstraat 42A**
**3020 Winksele (BE)**

(56) References cited:
**WO-A2-00/28683     US-A1- 2001 038 628**

• **DIELISSEN J ET AL: "Concepts and Implementation of the Philips Network-on-Chip" INTERNET CITATION, [Online] 13 November 2003 (2003-11-13), XP002330547 Retrieved from the Internet: URL:http://www.homepages.inf.ed.ac/kgoosse n/2003-ipsoc.pdf> [retrieved on 2005-06-06]**
• **OFEK Y ET AL: "COMBINED ASYNCHRONOUS/SYNCHRONOUS PACKET SWITCHING ARCHITECTURE:QOSGUARANTEES FOR INTEGRATED PARALLEL COMPUTING AND REAL-TIME TRAFFIC" JOURNAL OF PARALLEL AND DISTRIBUTED COMPUTING, ELSEVIER, AMSTERDAM, NL, vol. 60, no. 3, March 2000 (2000-03), pages 275-295, XP000945924 ISSN: 0743-7315**
• **LI C-S ET AL: "DISTRIBUTED SOURCE-DESTINATION SYNCHRONIZATION" 1996 IEEE INTERNATIONAL CONFERENCE ON COMMUNICATIONS (ICC). CONVERGING TECHNOLOGIES FOR TOMORROW'S APPLICATIONS. DALLAS, JUNE 23 - 27, 1996, IEEE INTERNATIONAL CONFERENCE ON COMMUNICATIONS (ICC), NEW YORK, IEEE, US, vol. VOL. 3, 23 June 1996 (1996-06-23), pages 1341-1347, XP000625029 ISBN: 0-7803-3251-2**

- MUTTERSBACH J ET AL: "Globally-asynchronous locally-synchronous architectures to simplify the design of on-chip systems" ASIC/SOC CONFERENCE, 1999. PROCEEDINGS. TWELFTH ANNUAL IEEE INTERNATIONAL WASHINGTON, DC, USA 15-18 SEPT. 1999, PISCATAWAY, NJ, USA,IEEE, US, 15 September 1999 (1999-09-15), pages 317-321, XP010360322 ISBN: 0-7803-5632-2

## Description

FIELD OF THE INVENTION

The present invention relates to an electronic device, to a method for frame synchronization, to a data processing system, and to a mobile device.

BACKGROUND OF THE INVENTION

Current mobile systems, such as a mobile phone or a PDA, show a continuous increase in complexity due to the ever increasing need for implementing new features and improvements of existing functions. This is enabled by the increasing number and complexity of the components of a system. At the same time the data rates at which these components communicate increases too. The higher data rates in combination with the increased system complexity has created the need for a modular approach. According to such an approach the processing system comprises a plurality of relatively independent, complex modules.

In conventional mobile systems, the modules usually communicate to each other via expensive parallel dedicated links. As the number of modules increases however, this way of communication is no longer practical for the following reasons. First, increased number of links are too costly. Second, using dedicated links limits the flexibility of quickly creating new system configurations.

A communication network using serial links forms an effective way to overcome these disadvantages. Networks have received considerable attention recently as a solution to the interconnect problem in highly-complex mobile systems (e.g., the UniPro Working Group is currently defining a network protocol for mobile devices in the MIPI standardization body; for more information please refer to www.mipi.org). The reason is twofold. First, the network links are serial, which considerably reduces the number of pins/wires for links, thus, considerably reduces the interconnect cost. Second, networks offer flexibility in the way modules are interconnected, allowing quick and easy creation of new configurations. However, for real-time applications which require tight timing constraints, such a network must offer throughput guarantees as well as latency bounds.

The interconnect centric approach offers a powerful way to rapidly develop new systems. In such an approach the system is developed as a plurality of nodes. The nodes, also denoted as data handling units, comprise functional units e.g. storage units, dedicated processors, general processors and data routing units such as routers and switches. The functional units are arranged in a network formed by the data routing units. It is noted that such a network may be a network on chip, a network coupling various integrating circuits, or a network coupling various computers. It is a fact that the communication protocol of the nodes tends to be standardized, and that a network like architecture may easily be expanded with new nodcs, facilitating design.

For cost and power reasons, links between the nodes are serial, use differential low-swing signaling, and run at high frequencies (1 GHz and above). At these speeds it is not possible to run a multiple chip system at a single clock. For this reason each chip has a local clock. Despite the fact that the clocks can mutually have the same nominal frequency, variations within known tolerance will in practice occur. These variations are caused by imperfections in the crystal oscillators and local temperature differences. In other systems various nodes may have intentionally different clock rates. Data transfer is still synchronous to a clock driven by the data producing node (transmitter). The clock is either sent on second serial pair of wires (source synchronous data transmission), or the clock is embedded in the data wires using for example an 8b10b encoding as in PCI Express. The data is sampled in the destination node (receiver) using the clock of the transmitter sent together with the data.

Using one of the know clock-domain crossing techniques, data is then transferred to the clock domain of the receiver. When implementing systems providing guaranteed performance, one must control precisely the usage of the resources in the system. One cost-effective way of achieving this is to define frames of slots in which slots are reserved for guaranteed-throughput communication. This data for which a guaranteed throughput is required will also be referred to as primary data. Data used for control of various functions will be referred to as control data. Such a system requires that frames in all devices and switches are synchronized.

Document »Dielissen J et al: "Concepts and Implementation of the Philips Network-on-Chip" INTERNET CITATION, [Online] 13November2003 (2003-11-13)« depicts an electronic device being a network system on a Chip (NoC).

Document »Ofek Y. et al.: 'Combined Asynchronous/ Synchronous Packet Switching Architecture: QoS Guarantees for Integrated Parallel Computing and Real-Time Traffic" JOURNAL OF PARALLEL AND DISTRIBUTED COMPUTING, ELSEVIER, AMSTERDAM, NL, vol. 60, no. 3, Maroh 2000 (2000-03), pages 275-295, ISSN: 0743-7315)« shows the general concept of integrating real-time traffic with data traffic on the same network and a corresponding relatively large scaled complex system.

SUMMARY OF THE INVENTION

It is an object of the invention to synchronize a transmission of frames in a multi-clock network environment comprising several network nodes.

This object is solved by an electronic device according to claim 1, by a method for frame synchronization according to claim 11, by a mobile device 12 and by a data processing system according to claim 13.

Therefore, an electronic device is provided with a plurality of functional units for communicating at least primary and secondary data based on Frames each being divided into a number of time slot, at least one network node for coupling functional units with at least one port having an associated receiver port unit for receiving at least primary and secondary data from one of the plurality of functional units in one of at least one first clock domain; and an associated transmitter port unit for transmitting at least primary and secondary data to another one of the plurality of functional units in one of at least one second clock domain. The at least one second clock domain is different from the at least one first clock domain. A time indication register is provided for storing information relating to the relative time position of a frame being received via the receiver port unit associated to one of the at least one ports and of a flame being transmitted via the transmitter port unit associated to the one of the at least one ports, wherein the time indication register is updated according to at least the primary and/or secondary data being received via the receiver port unit associated to the one of the at least one ports. A timer managing means is provided for monitoring the at least primary and secondary data received via the receiver port associated to one of the at least one ports in one of the at least one first clock domain and for pausing the transmission of at least the primary data via the transmitter port unit associated to the one of the at least one ports in one of the at least one second clock domain, if the value of the time indication register exceeds a predetermined threshold. The time managing means enables a transmission of secondary data even if the transmission of the primary data is paused. Hence, secondary data can be transmitted if primary data is paused to synchronize the frames.

Therefore, the transmission of the primary data is pauses only if the relative time position between a received frame and a transmitted frame exceeds a predefined value such that a frame synchronization can be implemented.

According to an aspect of the invention the time indication register is updated according to escape type packets received by the receiver port units to also take those packets into account.

According to a further aspect of the invention the updating of the time indication register and the pausing of the transmission can be performed at word boundaries or at slot boundaries such that the frame synchronization can be performed based on a fine granularity.

According to still a further aspect of the invention said frames have a predefined fixed duration each and said slots have a predefined fixed size.

According to a further aspect of the invention the size of the slots is adapted to accommodate the largest primary data packet.

According to a further aspect of the invention a primary data packet starts at a beginning of a slot reserved to it and a secondary packet starts at a beginning of an unreserved slot or in the middle of a slot, which is at least partly used by primary data. Hence, the secondary data, i.e. the BE data, can be transmitted when the available bandwidth of a link is not fully used by the primary data.

According to a further aspect of the invention the time managing means comprise one time managing unit for each of the ports within the network node for monitoring the primary and secondary data received via the receiver port unit of the port. Accordingly, the frame synchronization can be performed for each port independently.

According to still a further aspect of the invention each of the at least one network nodes comprise a time indication register for storing information relating to the relative time position for each port, and for updating the time indication information for each port such that the respective time indication information is available for each port individually.

The invention also relates to a method for frame synchronization within an electronic device having a plurality of functional units for communicating at least primary and secondary data based on frames each being divided into a number of time slot and at least one network node for coupling functional units having at least one port. At least primary and secondary data is received from one of the plurality of functional units in one of at least one first clock domain by a receiver port unit associated to the at least one port. At least primary and secondary data is transmitted to another one of the plurality of functional units in one of at least one second clock domain by a transmitter port unit associated to the at least one port. The at least one second clock domain is different from the at least one first clock domain. Information relating to the relative time position of a frame being received via the receiver port unit associated to one of the at least one ports and of a frame being transmitted via the transmitter port unit associated to the one of the at least one ports is stored in a time indication register. The time indication register is updated according to at least the primary and/or secondary data being received via the receiver port unit associated to the one of the at least one ports. The at least primary and secondary data received via the receiver port associated to one of the at least one ports in one of the at least one first clock domain is monitored by a timer managing means. The transmission of at least the primary data via the transmitter port unit associated to the one of the at least one ports in one of the at least one second clock domain is paused, if the value of the time indication register exceeds a predetermined threshold.

The invention also relates to a mobile device and a data processing system corresponding to the above mentioned electronic device.

The provision of a synchronization of frames across multiple-links can guarantee that buffer overflow at low buffer switches does not occur., which may provide bandwidth guarantees for e.g. real-time data traffic. Furthermore, it may present a low power option, i.e. an aggressive power management can be implemented. To enable such a frame synchronization respective information can be exchanged between nodes or need to be distributed to all nodes.

The invention is now described in more detail with reference to the drawings.

BRIEF DESCRIPTION OF THE DRAWINGS

Fig.1 shows a schematic block diagram of an architecture of a data processing system according to the invention;

Fig.2 shows a schematic illustration of a scheme of data transfer between two nodes;

Fig.3 shows schematic illustration of an example of a data packet in more detail;

Fig.4 shows a schematic illustration of an ISOC packet transmission according to the invention;

Fig.5 shows a schematic illustration of a BE packet transmission according to the invention;

Fig.6 shows a schematic illustration of a frame and its slots at different link rates;

Fig.7 shows a block diagram of a network node according to a first embodiment;

Fig.8 shows a flow diagram of the operation of a receiver within a network node according to Fig.7 without packet preemption;

Fig.9 shows a flow diagram of the operation of a receiver within a network node according to Fig.7 during the reception of an ISOC packet without packet preemption;

Fig.10 shows a flow diagram of the operation of a receiver within a network node according to Fig.7 during the reception of a BE packet without packet preemption and a time update;

Fig.11 shows a flow diagram of the operation of a receiver within a network node according to Fig.7 during the reception of a BE packet without packet preemption and without a time update;

Fig.12 shows a flow diagram of the operation of a time manager of the network node according to Fig.7;

Fig.13 shows a flow diagram of the operation of a time manager of the network node according to Fig.7 with frame synchronization but without packet preemption;

Fig. 14 shows a flow diagram of the operation of a receiver of the network node according to Fig. 7 with outputs of the same rate and with packet preemption;

Fig.15 shows a flow diagram of the operation of a time manager of the network node according to Fig.7 with frame synchronization and with packet preemption;

Fig.16 shows a block diagram of a network node according to a second embodiment;

Fig.17 shows a flow diagram of the operation of a time manager of the network node according to Fig. 16;

Fig. 18 shows a flow diagram of the operation of a time manager of a transmitter of the network node according to Fig.16; and

Fig.19 shows a flow diagram of the operation of a time manager of a transmitter of the network node according to Fig.16.

DESCRIPTION OF THE PREFERRED EMBODIMENTS

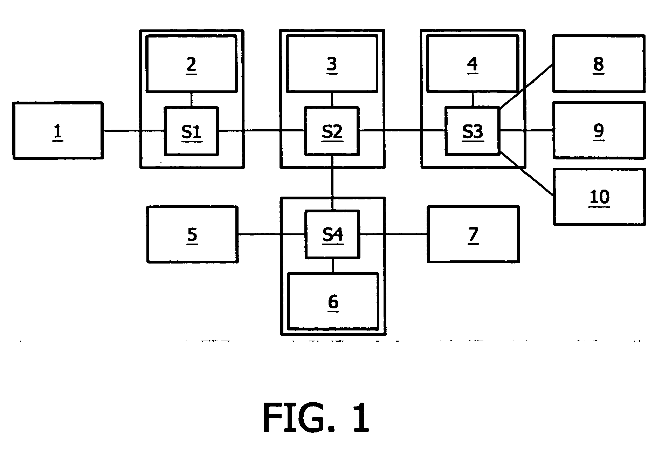

Fig.1 shows a schematic block diagram of an architecture of a data processing system or an electronic device in which the present invention may be applied. The data processing system or the electronic device can be e.g. implemented as a high-end mobile phone having various functional units, such as a modem 1, a communication accelerator 2, a first and a second general purpose processing engine 3, 6, a media accelerator 4, a camera 8, a display 9 and a mass storage units 5 and 10 as well as an auxiliary device 7. The functional units are coupled in a network by switches S1, S2, S3 and S4. The various functional units and switches may each operate at their own clock. Although the clocks may approximately have the same speed, an exact synchronization of the clocks cannot be provided. In other cases the respective clock may be different from each other. The switches may comprise at least one network node. When transmitting data with guaranteed throughput, such as isochronous data it is essential that the transmission is globally synchronized in the network. The present invention provides a communication scheme that guarantees that this condition is fulfilled.

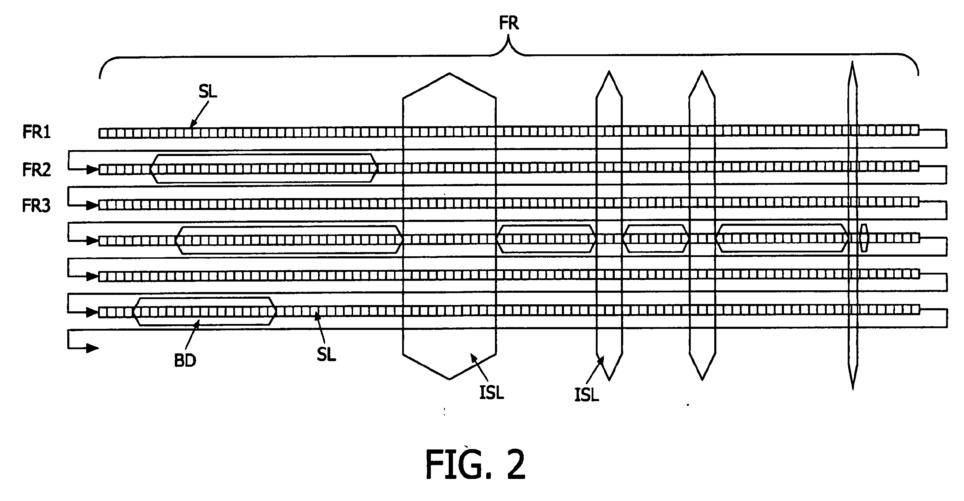

Fig.2 shows a schematic illustration of a scheme of data transfer between two nodes. Time-division multiplexing as preformed in the network constitutes a low cost solution by transferring data in time slots of equal size. The time slots can be reserved to data streams from the functional units. Frames comprising a number of slots each may be transmitted over each link within a network. The slots may be allocated to connections between different functional units. Preferably, a slot reservation is performed to ensure that the timing requirements of real-time data streams are satisfied.

Here, the available time for data transmission is subdivided in time-slots SL, which are indicated as rectangles. Each time-slot is available for transfer of a packet of data. Part of the time slots is reserved for data requiring a guaranteed throughput, here denoted as primary data such as isochronous data ISOC. In this example, these time slots are indicated by areas ISL. The other time slots are not reserved in advance, but can be granted at run-time for use by other data, also denoted as secondary data. Arbitration mechanisms known as such, e.g. round robin, priority scheduling may be used to select a data packet if two or more data sources want to transfer data along the same link. The remaining data can be transferred as bulk data BD, or as separate chunks of data. As can be seen in Fig.2, the slot reservations repeat after a fixed number of slots. This fixed number of slots is denoted here as a frame FR In this case a frame FR comprises 128 slots, but any number could be applied. Here, a first frame FR1 starts at t = 0, a second frame FR2 starts at t = 128 and a third frame starts at t = 256, where the time unit is the duration of a slot.

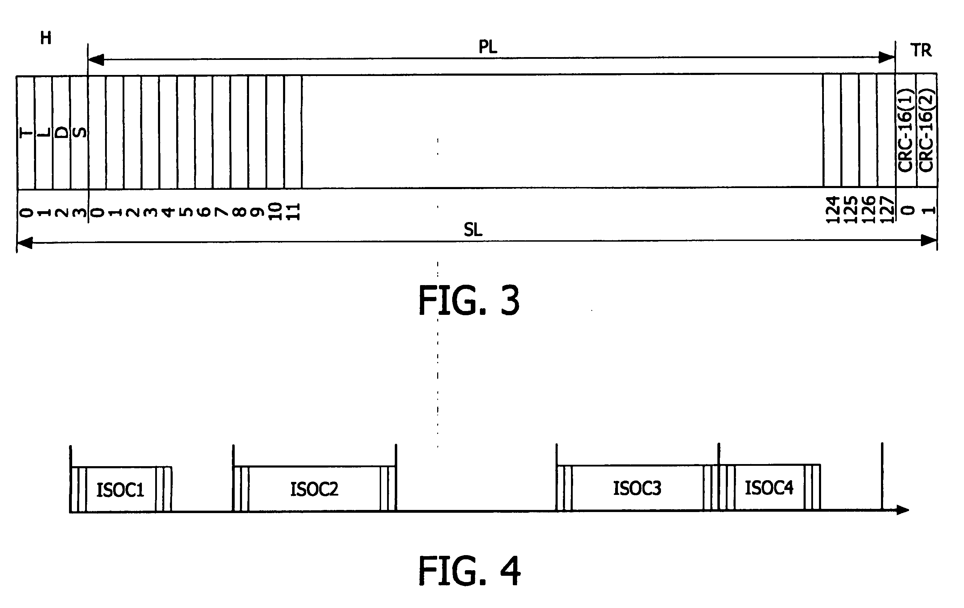

Fig.3 shows schematic illustration of an example of a data packet in more detail. The data packet shown comprises a header H, a payload PL and a trailer TR comprising 4, 128 and 2bytes, respectively.

In order to implement frame synchronization the slot size (e.g. 132 Bytes) and the frame duration (e.g. $125\mu$s) are fixed within the data processing system or electronic device according to the invention. The slot size is to be selected such that the largest guaranteed-throughput or ISOC packet (including its header and possibly a trail) can be accommodated.

The header H comprises the following structure: type T (1 byte), length L (1byte), destination address D (1byte) and source address S (1 byte). The payload PL may comprise 1 to 128 bytes according to the actual packet or part of a packet currently being transmitted. The trailer TR may comprise CRC-16 information (2 bytes). Alternatively, the size of a packet may vary between 7 (4 + 1 + 2) and 134 (4 + 128 + 2) bytes.

Isochronous or guaranteed-throughput packets ISOC relate a prescheduled package of a stream requiring a guaranteed throughput, e.g. for real-time traffic. This type of data may be referred to as primary data. The transmission of Best_effort packets BE or secondary data, are scheduled at run-time.

Fig.4 shows a schematic illustration of an ISOC packet transmission according to the invention. The ISOC packets are preferably always aligned to the start of a slot, but the ISOC packets do not necessarily have to occupy the entire slot. However, an ISOC packet will not extend over more than one slot as the slots have a fixed duration or size corresponding to the maximum ISOC packet size. Here, packet ISOC1 merely uses a part of the first slot while the packet ISOC2 occupies the entire second slot The next third slot does not contain any ISOC packet as the ISOC packets are only transferred in reserved slots. The packet ISOC3 occupies the entire fourth slot while packet ISOC4 only occupies part of the fifth slot

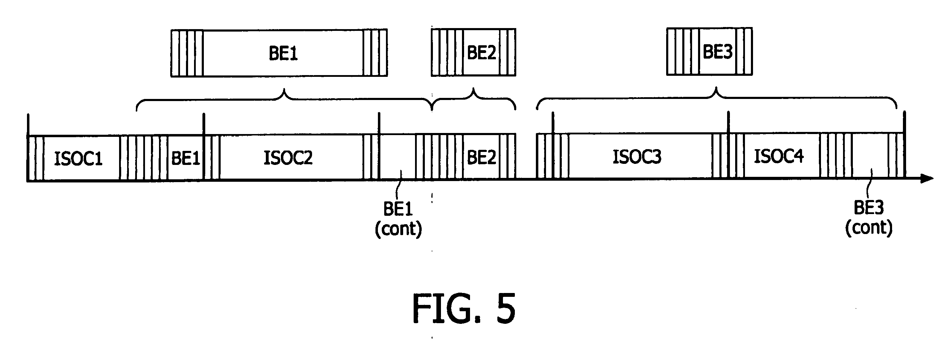

Fig.5 shows a schematic illustration of an BE packet transmission according to the invention. In particular, best effort packets BE1 - BE3 also need to be transferred during the time slots shown in Fig.4. The best effort packets BE1 - BE3 are not restricted to being aligned to the start or beginning of slot and are also not restricted to an end of a slot, i.e. the best effort packets BE can fill up the available band width of a link not being used by ISOC packets. These unused slots may include partially unused slots (e.g. packet ISOC1) in the first slot or completely unused slots, like the third slot. Here, the first slot only being partly occupied by packet ISOC1 can be filled by at least part of the BE packet BE1. As the BE packet BE1 is longer than the remaining space in the first slot the rest of packet BE1 must be accommodated in any subsequent slots. As the second slot is reserved for ISOC packets and as ISOC packets preempt any BE packets, the rest of the packet BE1 can only occupy the third slot. As the rest of the packet BE1 is shorter than the third slot and as ISOC packets always need to be aligned with the beginning of a slot, the a second BE packet BE2 can occupy the third slot, i.e. multiple BE packets may occupy a single slot.

In addition to the ISOC and BE packets also further packets ESC, namely of an escape type can be transmitted. The escape type allows a different format of the remainder of the header. Such a packet can be useful for various control functions, , e.g. to activate a link via which the data is communicated, to deactivate the link, or to indicate an error.

As frames are defined to have a fixed duration $T_{frame}$ (e.g., $T_{frame}$ = 125$\mu$s) and as the slots have a fixed length $l_{slot}$ ($l_{slot}$ = 1072bits), the number of slots in a frame depends on the link bit rate b, and is given by the following formula:

$$n = \left\lfloor \frac{T_{frame} \times b}{l_{slot}} \right\rfloor$$

The link bit rate b is a function of a) the clock frequency known with a given accuracy, b) line encoding, (e.g., no encoding or 8b10b encoding), and c) the number of lanes used for a link.

The slots typically do not entirely fill up a frame such that a remainder is left. This remainder can be used to compensate for bit-rate variations caused by e.g., temperature, or PLL inaccuracies, and/or to transfer non-ISOC data.

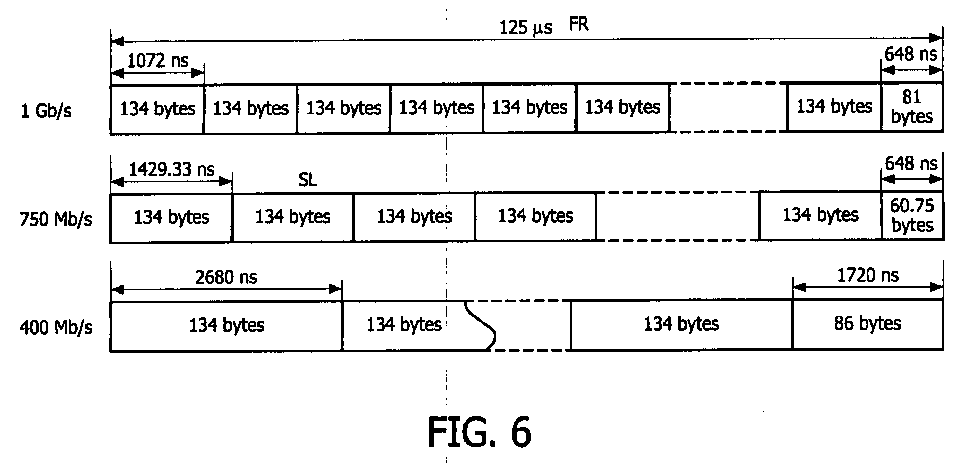

Fig.6 shows a schematic illustration of a frame and its slots at different link rates. Here, three examples are shown for links with a bit rate of 1 Gb/s, 750 Mb/s and 400 Mb/s, which result in a frame of 116, 87, and 46 slots, and a remainder of 648 ns (648 bits or 81 bytes), 648 ns (486 bits or 60.75 bytes), and 1720 ns (688 bits or 86 bytes), respectively.

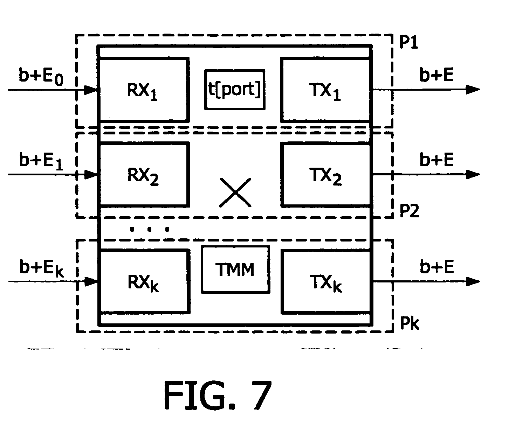

Fig.7 shows a block diagram of a network node according to a first embodiment. The network node comprises k receiving ports $RX_1$, $RX_2$, ..., $RX_k$ as well as k transmitting ports $TX_1$, $TX_2$, ..., $TX_k$. The node can receive data at any bit rate ($b_1 + E_1$, $b_2 + E_1$, ..., $b_k + E_k$) via its receiver ports $RX_1$, $RX_2$, ..., $RX_k$ and can transmit at the same bit rate. Furthermore, the node comprises a time manager TMM for managing the frame synchronization of the network node. The time manager may be provided to manage all ports in the network node. The time manager TMM may also be divided such that a part of the time manager is associated to each port to manage the frame synchronization of each port individually. A time indication register t[port] may also be provided in the network node. The time indication register t[port] is used to store time indication information relating to the time position of frames being received and transmitted. Preferably, the time indication register stores this information for each of the ports. The receiving ports $RX_1$ and the transmitting port $TX_1$ are associated to a first port P1, the receiving ports $RX_2$ and the transmitting port $TX_2$ are associated to a second port P2, and the receiving ports $RX_k$ and the transmitting port $TX_k$ are associated to a port Pk. In other words, data received by the receiving port $RX_1$ are transmitted by the transmitting port $TX_1$.

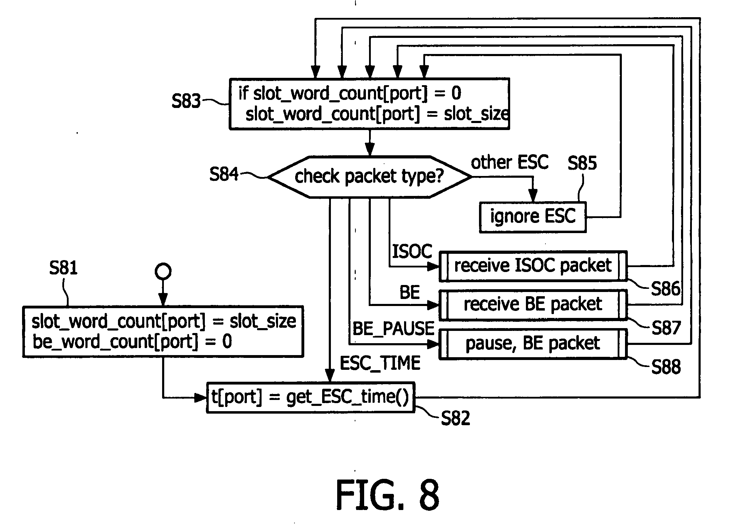

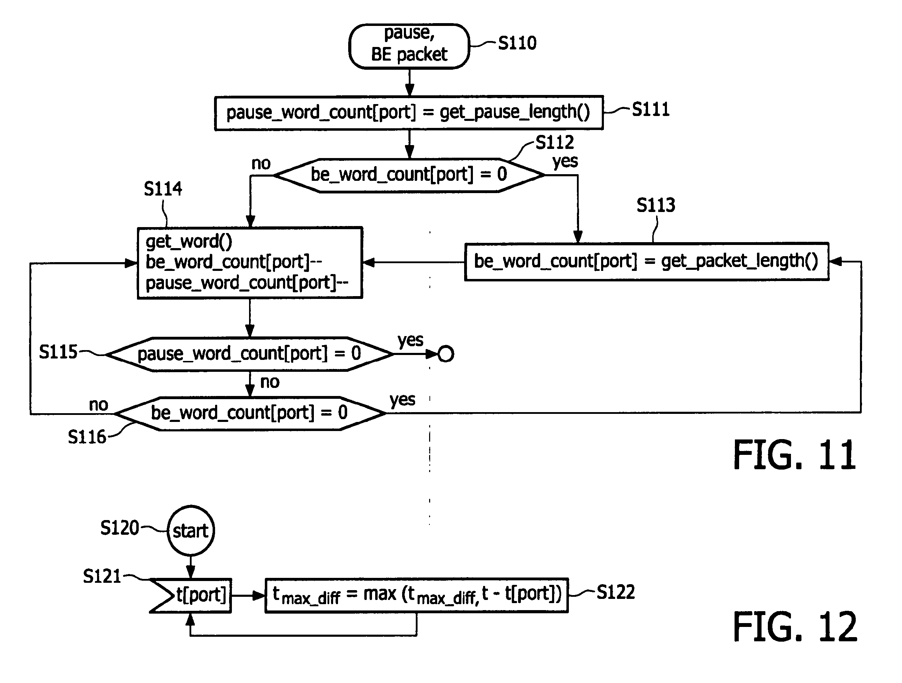

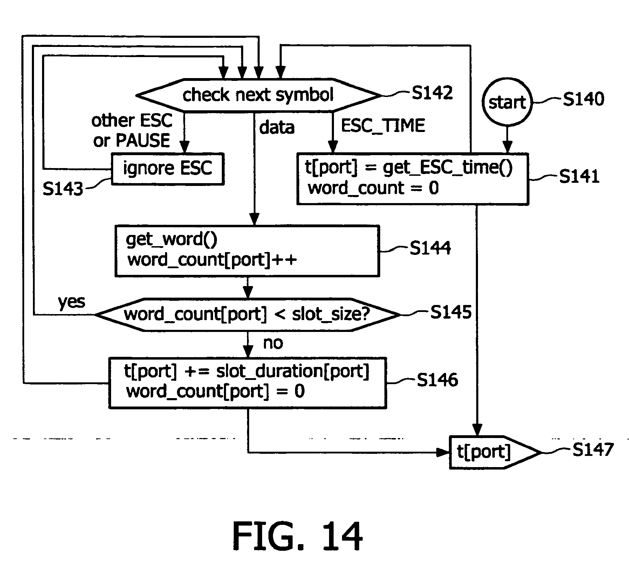

In the following the operation of the above network node, in particular the frame synchronization, is described for the case that its output links operate at the same bit rate. In Fig.8 and 12 the operation of the network node according to Fig.7 not supporting packet preemption and in Fig. 14 the operation of the network node according to Fig.7 supporting packet preemption is illustrated.

Fig.8 shows a flow diagram of the operation of a receiver within a network node according to Fig.7 without packet preemption. The node need to keep track of the timings on its input links, which is performed by the time manager TMM. If no packet preemption is available, the required control sequences may only occur at packet boundaries. At such a packet boundary, a receiver (or its receiver ports) can receive a time indication of the timings or time position of the input links via several indicators like ESC_TIME, a normal BE or ISOC packet, a BE packet while the clock is paused in the source BE_PAUSE, or any other control sequences (ESC, including ESC_PAUSE).

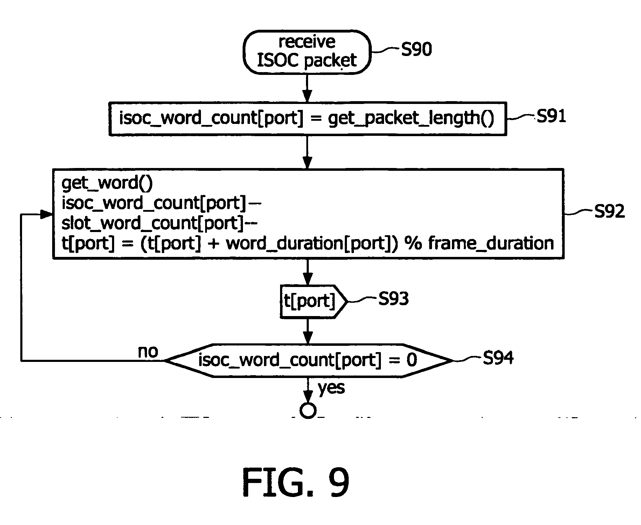

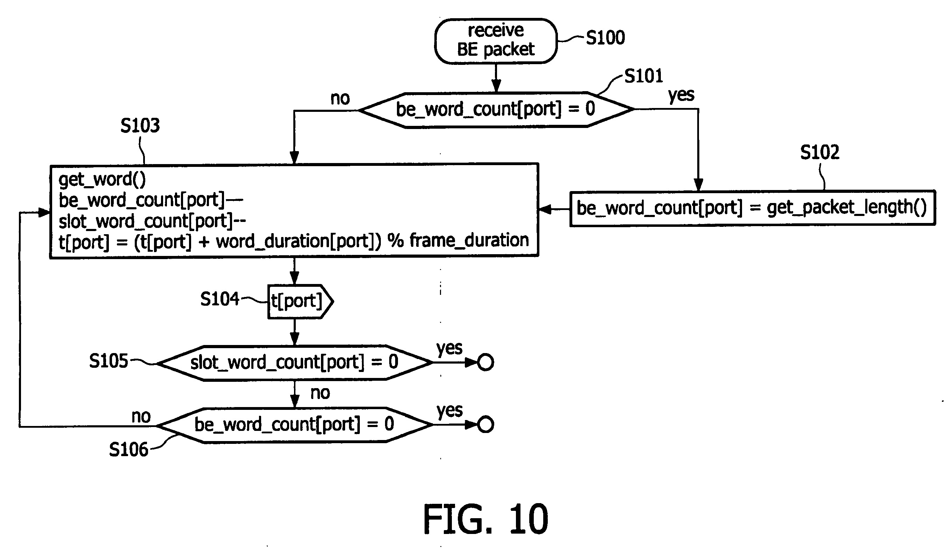

In step S81, a slot word counter slot_word_count [port] of a receiver port is set to the slot size slot_size. In step S82, a time indication ESC_TIME of the relative position of a frame from a node connected to the input ports is stored in a register t[port]. In step S83, it is checked whether the slot word counter slot_word_count [port] is zero, if this is true the slot word counter slot_word_count [port] is set to the slot size slot_size. In step S 84, the type of a received packet is checked. If the received packet is of an escape type, the flow continues to step S85 where this packet is ignored and the flow returns to step S83. If the received packet is of an ISOC type, the flow continues to step S86 and thereafter the flow returns to step S83. The operation in step S86 is described in more detail according to Fig 9. If the received packet is of a BE type, the flow continues to step S87 and thereafter the flow returns to step S83. The operation in step S87 is described in more detail according to Fig 10. If the received packet is of a BE_paused type, the flow continues to step S88 and thereafter the flow returns to step S83. The operation in step S88 is described in more detail according to Fig 11.

The time indication ESC_TIME is used as an update to the relative time position in a frame of a neighboring node. If a time indication is received, the receiver must update its knowledge of the time position in the frame of a neighboring node in the register t[port], i.e. in step S82. The time manager TMM of the node may access the register t[port]. All other control sequences (other ESC) are irrelevant to and are ignored by the time synchronization, i.e. step S85.

Data ISOC and BE packets may be used to track the time in a frame of e neighboring node, i.e. step S86 and S87, respectively. With each word received, the relative frame time knowledge of the neighbor as stored in the receiver register t[port] is increased with the time increment associated to transmitting a word, i.e. step S82. For the BE_PAUSE type packet, i.e. a BE packet is received without updating the frame knowledge, step S88 is preformed. This packet type may be used by the node to slow down its frame rate when it detected its frame rate is too high compared to that of its neighbors. In such a case, no ISOC packets can be sent, because they are only sent when the frame time advances. However, BE packets can still be sent, as they tend to use any portion of the bandwidth that is left.

Fig.9 shows a flow diagram of the operation of a receiver according to Fig.8 during the reception of an ISOC packet. In step S91, the packet length of the packet is extracted from the header of the packet and the ISOC word counter isoc_word_eounter is set to this value. In step S92, the whole packet is received (get_word 0, isoe_word_count[port]--) based on the extracted packet length. For each word of the packet the slot word counter slot_word_counter is updated to indicate the next slot boundary. The relative time position of the frame in a neighboring node is updated in the register t[port]. Again the time manager TMM of the node may access the register to perform the required synchronization. The receiving of the ISOC packet will end when all the words of the packet have been received (isoc_word_count[port] = 0) as shown in Step S94.

Fig. 10 shows a flow diagram of the operation of a receiver according to Fig.8 during the reception of a BE packet. In step S101, it is determined whether the packet is a new packet or a continuation of a packet by checking the BE word counter be_word_counter[port]. This counter contains the number of word still required to be received. If the counter is zero a new packet has started and the flow continues to step S102, where the packet length of the packet is extracted from the header of the packet and the BE word counter be_word_counter is set to this value. If the counter has a non-zero value, the preempted packet is present and must be resumed (step S103). In step S103, the whole packet is received (get_word (), be_word_count[port]--) based on the extracted packet length. For each word of the packet the slot word counter slot_word_counter is updated to indicate the next slot boundary. The relative time position of the frame in a neighboring node is updated in the register t[port] (step S104). Again the time manager TMM of the node may access the register to perform the required synchronization. The reception of a BE packet can be interrupted at a slot boundary (slot_word_count[port] = 0) as in step S105, or when the BE packet boundary is reached (be_word_count[port] = 0) as in step S106.

Fig. 11 shows a flow diagram of the operation of a receiver according to Fig.8 during the reception of a BE packet with packet preemption and without a time update. A reception of a BE packet without time update occurs e.g. when the neighbor slows down its frame speed to synchronize its frame speed to that of its neighbors. Here, BE packets can be received with a flag set, indicating that no update on the relative time position in the neighbor's frame t[port] should be performed.

In step S111, the number of pause words to be received is extracted from the BE_PAUSE message, and the paused word counter pause_word_counter[port] is set to this value. In step S11, data is received until pause_word_count[port] becomes zero. During this time, BE packets are received, similarly to receiving normal BE packets. In step S112, it is determined whether the packet is a new packet or a continuation of a packet by checking the BE word counter be_word_counter[port]. This counter contains the number of words still required to be received. If the counter is zero a new packet has started and the flow continues to step S113, where the packet length of the packet is extracted from the header of the packet and the BE word counter be_word_counter is set to this value. If the counter has a non-zero value, the preempted packet is present and must be resumed (step S114). In step S114, the whole packet is received (get_word 0 be_word_count[port]) based on the extracted packet length. The reception of a paused BE packet is interrupted when the all the pause words have been received (paused_word_count[port] = 0) as in step S115, or when the BE packet boundary is reached (be_word_count[port] = 0) as in step S116. If a BE packet boundary is reached, the flow returns to step S113. If the BE packet boundary has not been reached, the flow returns to S114.

Although not shown in the above Figs to keep drawings simple, even during a pause of the ISOC packets, at BE packet boundaries, ESC symbols may be received to e.g., announce an error on the link in the other direction

Fig.12 shows a flow diagram of the operation of a time manager TMM of the network node according to Fig.7. As mentioned above, the updates of the relative time position of frame of neighboring nodes are stored in the register t[port] and are available to the time manager TMM of a node. In step S121, the register t[port], which maintains its own relative position in the frame of other nodes based on its own local clock, is accessed by the time manager TMM. In step 122, the local time position and the time position of the neighboring nodes are compared and stored in a register $t_{max\_diff}$.

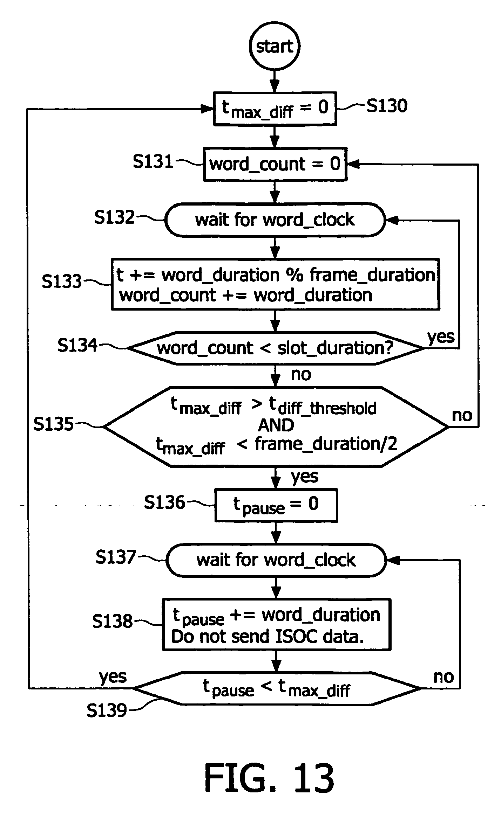

Fig.13 shows a flow diagram of the operation of a time manager TMM of the network node according to Fig.7 with frame synchronization but without packet preemption. In step 130, the difference between the local time position and the time positions of neighboring nodes is set to zero. In step S131, a word counter word_count is set to zero. In step S132, a word clock word_clock is awaited. In step 133, the word count word_count is updated by the time taken to receive a word word_duration (to track slot boundaries), and the relative time in the frame t is updated (to be used in Step S122 of Figure 12).

In step S134, it is determined whether a slot boundary has been reached, i.e. has the word counter word_count reached the slot size. If this is true the flow returns to step 5132. If not the flow continues with step S135. In step S135, $t_{max\_diff}$ is monitored not to exceed a threshold ($t_{diff\_threshold}$), which may either be hardwired or may be configured by the user. Furthermore the $t_{max\_diff}$ should be smaller then the frame_duration/2. At slot boundaries determined in step S134, this difference is checked, and if the difference is above the threshold $t_{diff\_threshold}$, the frame is paused for the time duration given by $t_{max\_diff}$. The pause time is maintained in $t_{pause}$, which is initialized to 0 in Step S136, and updated in Step S13 8 with the word_duration, every time a word clock word_clock is received in step S137. As shown in Step 138, no ISOC data is send during frame pausing. In step S139, it is determined whether $t_{pause} < t_{max\_diff}$. If this is true the flow returns to step S130; if not, the flow returns to step 137. Accordingly, a frame synchronization is achieved by slowing down frame speed to the speed of the slower frames.

In the flow diagram of Fig. 13, slot boundaries are used because then all links may start synchronously pausing their ISOC transmission.

Fig. 14 shows a flow diagram of the operation of a receiver of the network node according to Fig. 7 with outputs of the same rate and with packet preemption. If the system offers packet preemption (e.g., by using K codes in 8b10b encoding), the operation of the receiver is much simpler as compared to the operation of the receiver according to Fig.8 without packet preemption. The receiver is not bound to any slot boundaries or packet boundaries such that an ESC sequence can be received at any time. Therefore, there is no need to keep track of packet/slot boundaries. Merely the occurrence of ESC sequences are to be tracked. In step S141, the register t[port] is set to the extracted ESC time and the word counter word_count is set to zero. The flow continues to step S142, where the next symbol is checked. If the symbol relates to a ESC symbol (other than ESC_TIME) or to a PAUSE symbol or data, then the flow continues to step S143, where this symbol is ignored with respect to the frame synchronization and the flow returns to step S142. Otherwise the flow continues to step S144. In step S144, a word of a packet is received. For each word of the packet the word counter word_counter is increased, i.e. updated. In step S145 it is determined whether the word count word_count[port] is smaller than slot_size corresponding to the slot_size symbols in a slot. If this is true, the flow returns to step S142. However, if this is not true, the flow continues to step S146. In step S146, the value of the register t[port] is increased by the slot duration slot_duration[port] (which is stored in the register, step S147). Furthermore, the word counter word_count[port] is set to zero and the flow returns to step S142.

If an ESC_TIME sequence is received in step S141, the relative time position of a neighboring node is automatically updated to a new value which is in turn reported to the time manager TMM in the register t[port] step S147. When normal data (BE and ISOC packets, or IDLE symbols) is received in step S142, the register t[port] is updated to the duration of a word in the clock domain of a neighboring node (step S146), and is immediately reported to the time manager TMM (step S147).

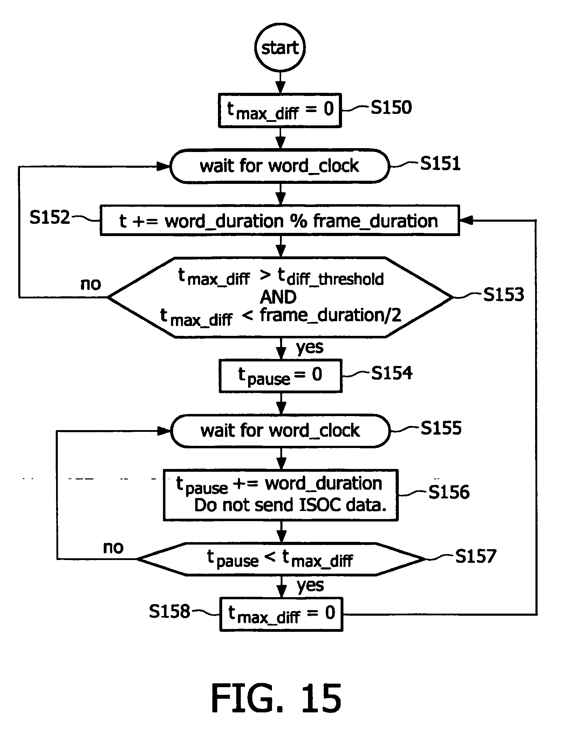

Fig.15 shows a flow diagram of the operation of a time manager TMM of the network node according to Fig.7 with frame synchronization and with packet preemption. In step 150, the difference between the local time position and the time positions of neighboring nodes is set to zero. In step S151, a word clock word_clock is awaited. In step 152, the relative time in the frame t is updated by the word duration, which is used in Step S122 to compute $t_{max\_diff}$.

In step S153, $t_{max\_diff}$ is monitored not to exceed a threshold ($t_{diff\_threshold}$), which may either be hardwired or may be configured by the user. Furthermore the $t_{max\_diff}$ must be smaller then the frame duration/2. If this is the case, the flow returns to step S151; if not the flow continues to step S154. In step S154, the frame is paused by setting $t_{pause}$ to zero such that the reported drift ($t_{max\_diff}$) is zeroed. In step S155, a word clock word_clock is awaited. In step 156, $t_{pause}$ is increased by a word duration and no ISOC data is send. In step S157, it is determined whether $t_{pause} < t_{max\_diff}$. If this is true the flow continues to step S158; if not, the flow returns to step 155. In step S158 the $t_{max\_diff}$ is set to zero and the flow returns to step S152.

Accordingly, if packet preemption is available, the design of the time manager TMM is also simplified compared to the design according to Fig. 13, as it does not need to keep track of slot boundaries (e.g. steps S131, S134). The frame drift $t_{max\_diff}$ is checked at each clock (step 153), and if it is above the threshold $t_{diff\_thfeshotd}$, the frame is too much ahead compared to at least one of the neighbors, and it has to be paused (step S154). As mentioned above, during the frame pause, BE packets and other ESC symbols can be sent.

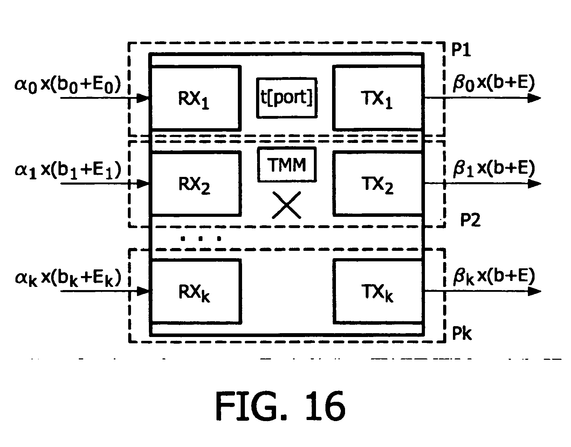

Fig.16 shows a block diagram of a network node according to a second embodiment. The network node comprises k receiving ports $RX_1$, $RX_2$, ..., $RX_k$ as well as k transmitting ports $TX_1$, $TX_2$, ..., $TX_k$. The node can receive data at any bit rate ($A_1*(b_1 + E_1)$, $\alpha_2 * b_2 + E_1)$, ..., $\alpha_k * (b_k + E_k)$) via its receiver ports $RX_1$, $RX_2$, ..., $RX_k$; and output data at any bit rate ($\beta_1*(b_1 + E_1)$, ($\beta_2*(b_2 + E_1)$, ..., ($\beta_k*(b_k + E_k)$) via its transmitter ports $TX_1$, $TX_2$, ..., $TX_k$. The time manager TMM may be provided to manage all ports in the network node. The time manager TMM may also be divided such that a part of the time manager is associated to each port to manage the frame synchronization of each port individually. A time indication register t[port] may also be provided in the network node. The time indication register t[port] is used to store time indication information relating to the time position of frames being received and transmitted. Preferably, the time indication register stores this information for each of the ports. The receiving ports $RX_1$ and the transmitting port $TX_1$ are associated to a first port P1, the receiving ports $RX_2$ and the transmitting port $TX_2$ are associated to a second port P2, and the receiving ports $RX_k$ and the transmitting port $TX_k$ are associated to a port Pk. In other words, data received by the receiving port $RX_1$ are transmitted by the transmitting port $TX_1$.

Here, a general case for a network node is shown where the output links of the node run at different bit rates. The bit rates of the output links may be derived from the same reference clock. Therefore, output links may run at bit rates which are multiple of a basic bit rate (b+E), where E being the deviation from the nominal bit rate b, cased by clock inaccuracies. The output links are likely to have different bit rates, because the links may have one or more lanes, each additional lane increasing the lane bit rate.

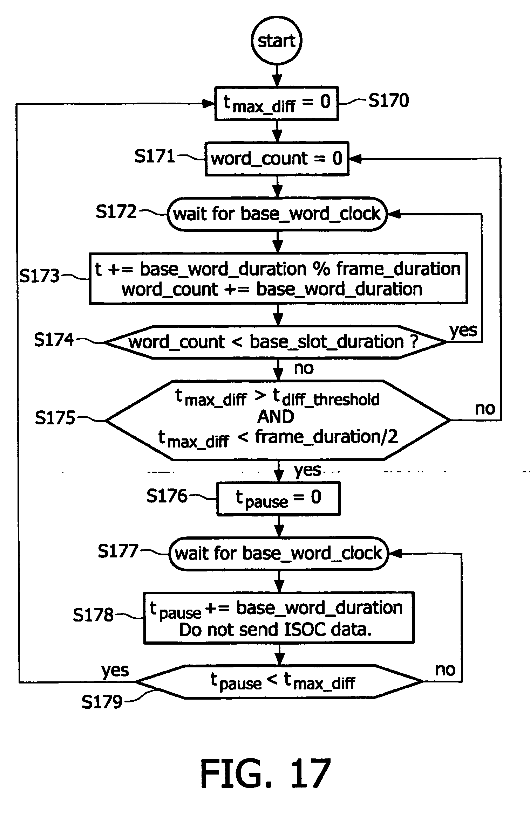

Fig.17 shows a flow diagram of the operation of a time manager TMM of the network node according to Fig.16 with frame synchronization but without packet preemption. This flow diagram substantially corresponds to the flow diagram of Fig.13. In step 10, the difference between the local time position and the time positions of neighboring nodes is set to zero. In step S171, a word counter word_count is set to zero. In step S172, a base word clock base_word_clock is awaited. In step 173, the word count word_count is updated by a base word duration base_word_duration of a received word from a packet. In step S174, it is determined whether a slot boundary has been reached, i.e. has the word counter word_count reached the base slot duration. If this is true, the flow returns to step S172. If not the flow continues with step S175. In step S175, $t_{max\_diff}$ is monitored not to exceed a threshold ($t_{diff\_threshold}$), which may either be hardwired or may be configured by the user. Furthermore the $t_{max\_diff}$ must be smaller then the frame_duration/2. At slot boundaries determined in step S174, this difference is checked, and if the difference is above the threshold $t_{diff\_threshold}$, the frame is paused by setting $t_{pause}$ to zero such that the reported drift ($t_{max}$-$_{diff}$) is zeroed. In step S177, a base word clock base_word_clock is awaited. In step 178, $t_{pause}$ is increased by a base word duration base_word_duration and no ISOC data is send. In step S179, it is determined whether $t_{pause} < t_{max\_diff}$. If this is true the flow returns to step S170; if not, the flow returns to step 177. Accordingly, a frame synchronization is achieved by slowing down frame speed to the speed of the slower frames.

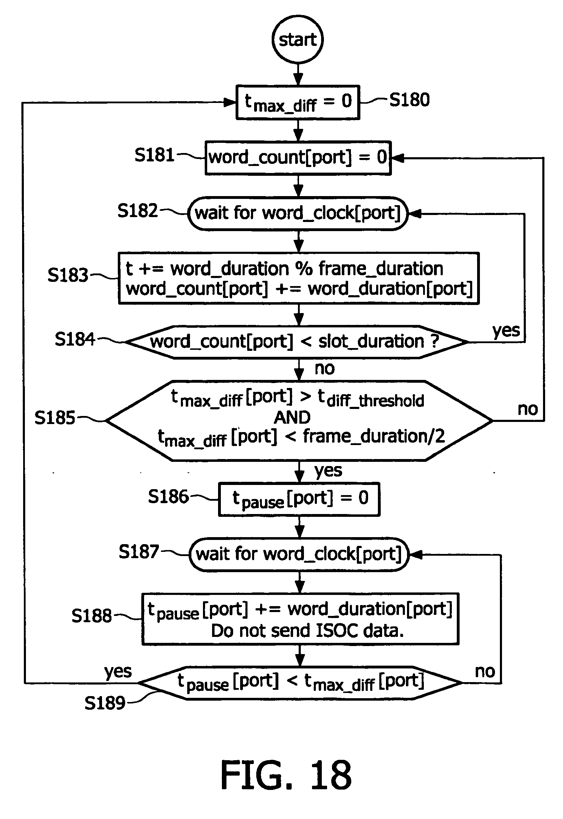

Accordingly, the receiver as well as the computing of $t_{max\_diff}$ in the node remain the same as for the single link speed according to Fix.8. The only part that needs to be changed is the time manager TMM. The change is performed by deriving the used word clock (base_word_clock) and the word duration (base_word_duration) to the base rate b. When a slot is counted using the base_word_clock, all the output links will also be at a slot boundary, and the frame can be temporarily paused to be aligned again with the phase of its neighbors. The disadvantage of this scheme is that at the granularity of the frame synchronization may be too large for a high-speed link, resulting in an increased buffering. To solve this problem, the time manager TMM can be split in multiple time managers, one per link, as shown according to Fig.18. The basic scheme is the same, but in this case, each time manager uses the transmitter's clock word_clock[port] and word duration word_duration[port], and has its own state word_count[port], $t_{pause}$[port], and $t_{max\_diff}$[port].

Fig.18 shows a flow diagram of the operation of a time manager TMM of the network node according to Fix.16. This flow diagram substantially corresponds to the flow diagram of Fig.13. In step 180, the difference between the local time position and the time positions of neighboring nodes is set to zero. In step S171, a word counter for each port word_count is set to zero. In step S182, a word clock for each port word_clock is awaited. In step 183, the word count for each port word_count is updated by a word duration word_duration of a received word from a packet. In step S184, it is determined whether a slot boundary has been reached, i.e. has the word counter for each port word_count reached the slot size. If this is true, the flow returns to step S182. If not the flow continues with step S185. In step S185, $t_{max\_diff}$ is monitored not exceed a threshold ($t_{diff\_threshold}$), which may either be hardwired or may be configured by the user. Furthermore the $t_{max\_diff}$ must be smaller the the frame_duration/2. At slot boundaries for each port determined in step S184, this difference is checked, and if the difference is above the threshold $t_{diff\_threshold}$, the frame is paused for the port by setting $t_{pause}$ to zero such that the reported drift ($t_{max\_diff}$) is zeroed. In step S187, a word clock word_clock is awaited. In step 188, $t_{pause}$ is in-

creased by a word duration word_duration and no ISOC data is send. In step S189, it is determined whether $t_{pause} < t_{max\_diff}$. Ifthis is true the flow returns to step S180; if not, the flow returns to step 187. Accordingly, a frame synchronization is achieved by slowing down frame speed to the speed of the slower frames.

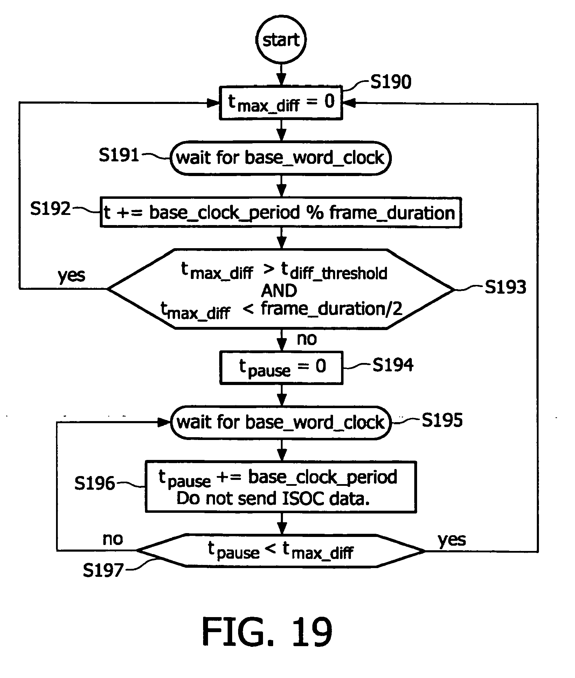

When packet preemption is present, the flow diagram according to Fig.15 can still be used, using e.g., the base clock base_word_clock from which the base word duration base_word_duration is derived to maintain the local relative position in the frame, as will be described according to Fig.19.

Fig.19 shows a flow diagram of the operation of a time manager TMM of a transmitter of the network node according to Fig.7. In step 190, the difference between the local time position and the time positions of neighboring nodes is set to zero. In step S191, a base word clock base_word_clock is awaited. In step 192, the relative time in the frame t is updated with the time to transmit a word word_duration. The time t is used to compute the drift between the current node and its neighbors, as shown in Step S122 according to Fix.12.

In step S193, $t_{msx-diff}$ is monitored not to exceed a threshold ($t_{diff\_threshold}$), which may either be hardwired or may be configured by the user. Furthermore the $t_{max\_diff}$ must be smaller the the frame_duration/2. If this is the case, the flow returns to step S190; if not the flow continues to step S194. In step S154, the frame is paused by setting $t_{pause}$ to zero such that the reported drift ($t_{max\_diff}$) is zeroed. In step S195, a base word clock base_word_clock is awaited. In step 196, $t_{pause}$ is increased by a base word duration and no ISOC data is send In step S197, it is determined whether $t_{pause} < t_{max\_diff}$. If this is true, the flow returns to step S190; if not, the flow returns to step 195.

According to a third embodiment, the above described frame synchronization may also be applied to a situation where there is no relationship between link bit rates. Here, merely the time manager TMM needs to be adopted. The time manager TMM must be distributed across transmitters (output ports) according to Fig. 18. This must be done for the case in which no preemption is available as well as in the case in which preemption is available. If some of the output links use the same bit rate, or a bit rate derived from a common base bit rate, a time manager TMM can be shared across these links.

In all above embodiments the time manager TMM and the time indication register t[port] may be implemented as a unit for all port. Alternatively, they may be implemented for each of the ports or may be divided such that a time manager and/or a time indication register is provided for each port. Accordingly, a frame synchronization can be achieved for each of the ports independently.

According to an embodiment an electronic device is provided comprising a plurality of functional units (1-10) for communicating at least primary and secondary data (ISOC; BE) based on frames (FR) each being divided into a number of time slot (SL) and at least a network node (S1-S4) for coupling functional units (1-10); comprising a receiver (RX) having at least one receiver port ($RX_1$, $RX_2$, ..., $RX_k$) for receiving at least primary and secondary data (ISOC; BE) from one of the plurality of functional units (1-10) in one of at least one first clock domain; and a transmitter (TX) having at least one transmitter port (TX), $TX_2$, ..., $TX_k$) for transmitting at least primary and secondary data (ISOC; BE) to another one of the plurality of functional units (1-10) in one of the at least one second clock domain. The at least one second clock domain is different from the at least one first clock domain. The electronic device further comprises a time indication register (t[port]) for storing information relating to the relative time position of a frame being received via the at least one receiver port ($RX_1$, $RX_2$, ..., $RX_k$) and a frame being transmitted via the via at least one transmitter port ($TX_1$, $TX_2$, ..., $TX_k$), wherein the time indication register is updated according to primary and/or secondary data (ISOC;BE) being received via the at least one receiver port ($RX_1$, $RX_2$, ..., $RX_k$), and a timer managing means (TMM) for monitoring the at least primary and secondary data (ISOC; BE) received at the at least one receiver port of the receiver (RX) in one of the at least one first clock domain and for pausing the transmission of at least the primary data (ISOC) via at least one transmitter port ($TX_1$, $TX_2$, ..., $TX_k$) in one of the at least one second clock domain, if the value of the time indication register exceeds a predetermined threshold.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. In the device claim enumerating several means, several of these means can be embodied by one and the same item of hardware. The mere fact that certain measures are recited in mutually different dependent claims does not indicate that a combination of these measures cannot be used to advantage.

Furthermore, any reference signs in the claims shall not be constrained as limiting the scope of the claims.

**Claims**

1. Electronic device, comprising:

   a plurality of functional units (1-10) for communicating at least primary and secondary data (ISOC; BE) based on frames (FR) each being divided into a number of time slots (SL);

at least one network node (S1-S4) for coupling functional units (1-10), comprising at least one port (P1, P2, ..., Pk) having an associated receiver port unit ($RX_1$, $RX_2$, ..., $RX_k$ for receiving at least primary and secondary data (ISOC; BE) from one of the plurality of functional units (1-10) in one of at least one first clock domain; and an associated transmitter port unit ($TX_1$, $TX_2$, ..., $TX_k$) for transmitting at least primary and secondary data (ISOC; BE) to another one of the plurality of functional units (1-10) in one of at least one second clock domain;
the at least one second clock domain being different from the at least one first clock domain;

**characterized by** that the at least one network node comprises

   a time indication register (t[port]) for storing information relating to the relative time position of a frame being received via the receiver port unit ($RX_1$, $RX_2$ ..., $RX_k$ associated to one of the at least one ports (P1, P2, ..., Pk) and of a frame being transmitted via the transmitter port unit ($TX_1$, TX2, ..., $TX_k$ associated to the one of the at least one ports (P1, P2, ..., Pk), wherein the time indication register (t[port]) is updated according to at least the primary and/or secondary data (ISOC;BE) being received via the receiver port unit ($RX_1$, $RX_2$, ..., $RX_k$) associated to the one of the at least one ports (P 1, P2, ..., Pk); and that the at least one network node comprises

   a timer managing means (TMM) for monitoring the at least primary and secondary data (ISOC; BE) received via the receiver port ($RX_1$, $RX_2$, ..., $RX_k$) associated to one of the at least one ports (P1, P2, ..., Pk) in one of the at least one first clock domain and for pausing the transmission of at least the primary data (ISOC) via the transmitter port unit ($TX_1$, $TX_2$, ..., $TX_k$) associated to the one of the at least one ports (P1, P2, ..., Pk) in one of the at least one second clock domain, if the value of the time indication register exceeds a predetermined threshold, wherein the time managing means (TMM) is adapted to enable a transmission of secondary data (BE) even if the transmission of the primary data (ISOC) is paused.

2. Electronic device according to claim 1, wherein the time indication register (t[port]) is further updated according to escape type packets (ESC_TIME) received by the receiver port units ($RX_1$, $RX_2$, ..., $RX_k$).

3. Electronic device according to claim 1, wherein the updating of the time indication register (t[port]) and the pausing of the transmission can be performed at word boundaries or at slot boundaries.

4. Electronic device according to claim 1, wherein said frames (FR) have a predefined fixed duration each.

5. Electronic device according to claim 1, wherein said slots (SL) have a predefined fixed size each.

6. Electronic device according to claim 5, wherein the size of the slots (SL) is adapted to accommodate the largest primary data packet (ISOC).

7. Electronic device according to claim 5 or 6, wherein a primary data packet (ISOC) starts at a beginning of a slot reserved to it, and a secondary packet (BE) starts at a beginning of an unreserved slot or in the middle of a slot, which is at least partly used by primary data (ISOC).

8. Electronic device according to claim 1, wherein each of the at least one network nodes (S1-S4) comprise a time managing means (TMM).

9. Electronic device according to claim 8, wherein the time managing means (TMM) comprise one time managing unit (TMM1, TMM2, ..., TMMk) for each of the ports (P1, P2, ..., Pk) within the network node (S1-S4) for monitoring the primary and secondary data (ISOC, BE) received via the receiver port unit ($RX_1$, $RX_z$, ..., $RX_k$) of the port (P1, P2, ..., Pk).

10. Electronic device according to claim 8 or 9, wherein each of the at least one network nodes (S1-S4) comprise a time indication register (t[port]) for storing information relating to the relative time position of a frame being received via the receiver port unit ($RX_1$, $RX_2$, ..., $RX_k$) and of a frame being transmitted via the transmitter port unit ($TX_1$, $TX_2$, ..., $TX_k$) for each of the at least one ports (P1, P2, ..., Pk), and for updating the time indication information for each port (P1, P2, ..., Pk) according to at least the primary and/or secondary data (ISOC;BE) being received via the receiver port unit ($RX_1$, $RX_2$, ..., $RX_k$) of the at least one port (P1, P2, ..., Pk).

11. Method for frame synchronization within an electronic device having a plurality of functional units (1-10) for communicating at least primary and secondary data (ISOC; BE) based on frames (FR) each being divided into a number of time slots (SL) and at least a network node (S1-S4) for coupling functional units (1-10) having at least one port (P1, P2, ..., Pk), comprising the steps of receiving at least primary and secondary data (ISOC; BE) from one of the plurality of functional units (1-10) in one of at least one first clock domain by a receiver port unit ($RX_1$, $RX_2$, ..., $RX_k$) associated to the at least one port (P1, P2, ..., Pk); and transmitting at least primary and secondary data (ISOC; BE) to another one of the plurality of functional units (1-10) in one of at least one second clock domain by a transmitter port unit ($TX_1$, $TX_2$, ..., $TX_k$) associated to the at least one port (P1, P2, ..., Pk); wherein the at least one second clock domain is different from the at least one first clock domain; **characterized by** execrting in at least one network node the steps of:

storing information relating to the relative time position of a frame being received via the receiver port unit ($RX_1$, $RX_2$, ..., $RX_k$) associated to one of the at least one ports (P1, P2, ..., Pk) and of a frame being transmitted via the transmitter port unit ($TX_1$, $TX_2$, ..., $TX_k$) associated to the one of the at least one ports (P1, P2, ..., Pk) in a time indication register (t[port]); updating the time indication register (t[port]) according to at least the primary and/or secondary data (ISOC;BE) being received via the receiver port unit ($RX_1$, $RX_2$, ..., $RX_k$) associated to the one of the at least one ports (P1, P2, ..., Pk); monitoring the at least primary and secondary data (ISOC; BE) received via the receiver port ($RX_1$, $RX_2$, ..., $RX_k$) associated to one of the at least one ports (P1, P2, ..., Pk) in one of the at least one first clock domain by a timer managing means (TMM);and pausing the transmission of at least the primary data (ISOC) via the transmitter port unit ($TX_1$, $TX_2$, ..., $TX_k$) associated to the one of the at least one ports (P1, P2, ..., Pk) in one of the at least one second clock domain, if the value of the time indication register exceeds a predetermined threshold, wherein a transmission of secondary data (BE) is enabled by the timer managing means (TMM) even if the transmission of the primary data (ISOC) is paused.

12. Mobile device, comprising the electronic device according to claim 1.

13. Data processing system, comprising the electronic device according to claim 1.

**Patentansprüche**

1. Elektronische Vorrichtung, umfassend:

mehrere funktionelle Einheiten (1-10) zum Kommunizieren von zumindest primären und sekundären Daten (ISOC; BE) auf der Basis von Frames (FR), die jeweils in eine Anzahl von Zeitschlitzen (SL) unterteilt sind;

zumindest einen Netzwerkknoten (S1-S4) zum Koppeln funktioneller Einheiten (1-10), umfassend zumindest einen Port (P1, P2, ..., Pk) mit einer verknüpften Empfangsporteinheit (RX$_1$, RX$_2$, ..., RX$_k$) zum Empfangen von zumindest primären und sekundären Daten (ISOC; BE) von einer der mehreren funktionellen Einheiten (1-10) in einer von zumindest einer ersten Taktdomäne; und eine verknüpfte Sendeporteinheit (TX$_1$, TX$_2$, ..., TX$_k$) zum Senden von zumindest primären und sekundären Daten (ISOC; BE) zu einer anderen der mehreren funktionellen Einheiten (1-10) in einer von zumindest einer zweiten Taktdomäne;
wobei sich die zumindest eine zweite Taktdomäne von der zumindest einen ersten Taktdomäne unterscheidet;
**dadurch gekennzeichnet, dass** der zumindest eine Netzwerkknoten umfasst
ein Zeitanzeigeregister (t[port]) zum Speichern von Informationen, die sich auf die relative Zeitposition eines Frames beziehen, der über die Empfangsporteinheit (RX$_1$, RX$_2$, ..., RX$_k$) empfangen wird, die mit einem von zumindest einem Port (P1, P2, ..., Pk) verknüpft ist, und eines Frames, der über die Sendeporteinheit (TX$_1$, TX$_2$, ..., TX$_k$) gesendet wird, die mit dem einem von zumindest einem Port (P1, P2, ..., Pk) verknüpft ist, wobei das Zeitanzeigeregister (t[port]) entsprechend den zumindest primären und/ oder sekundären Daten (ISOC; BE) aktualisiert wird, die über die Empfangsporteinheit (RX$_1$, RX$_2$, ..., RX$_k$) empfangen werden, die mit dem einem von zumindest einem Port (P1, P2, ..., Pk) verknüpft ist, und dass der zumindest eine Netzwerkknoten umfasst:

ein Zeitgeberverwaltungsmittel (TMM) zum Überwachen der zumindest primären und/ oder sekundären Daten (ISOC; BE), die über den Empfangsport (RX$_1$, RX$_2$, ..., RX$_k$), der mit dem einem von zumindest einem Port (P1, P2, ..., Pk) verknüpft ist, in einer der zumindest einen ersten Taktdomäne empfangen werden, und zum Pausieren der Sendung zumindest der primären Daten (ISOC) über die Sendeporteinheit (TX$_1$, TX$_2$, ..., TX$_k$), die mit dem einem von zumindest einem Port (P1, P2, ..., Pk) verknüpft ist, in einer der zumindest einen zweiten Taktdomäne, wenn der Wert des Zeitanzeigeregisters einen vorbestimmten Schwellenwert übersteigt, wobei das Zeitgeberverwaltungsmittel (TMM) dazu ausgebildet ist, eine Sendung von sekundären Daten (BE) selbst dann freizugeben, wenn das Senden der primären Daten (ISOC) pausiert wird.

2. Elektronische Vorrichtung nach Anspruch 1, wobei das Zeitanzeigeregister (t[port]) des Weiteren entsprechend Pakten vom Escape-Typ (ESC_TIME) aktualisiert wird, die von den Empfangsporteinheiten (RX$_1$, RX$_2$, ..., RX$_k$) empfangen werden.

3. Elektronische Vorrichtung nach Anspruch 1, wobei die Aktualisierung des Zeitanzeigeregisters (t[port]) und das Pausieren der Sendung an Wortgrenzen oder an Schlitzgrenzen durchgeführt werden können.

4. Elektronische Vorrichtung nach Anspruch 1, wobei die Frames (FR) jeweils eine vordefinierte unveränderliche Dauer haben.

5. Elektronische Vorrichtung nach Anspruch 1, wobei die Schlitze (SL) jeweils eine vordefinierte unveränderliche Größe haben.

6. Elektronische Vorrichtung nach Anspruch 5, wobei die Größe der Schlitze (SL) dazu ausgebildet ist, das größte primäre Datenpaket (ISOC) aufzunehmen.

7. Elektronische Vorrichtung nach Anspruch 5 oder 6, wobei
ein primäres Datenpaket (ISOC) zu Beginn eines Schlitzes beginnt, der für dieses reserviert ist, und ein sekundäres Datenpaket (ISOC) zu Beginn eines unreservierten Schlitzes oder in der Mitte eines Schlitzes beginnt, der zumindest teilweise von den primären Daten (ISOC) verwendet wird.

8. Elektronische Vorrichtung nach Anspruch 1, wobei jeder von zumindest einem Netzwerkknoten (S1-S4) ein Zeitverwaltungsmittel (TMM) umfasst.

9. Elektronische Vorrichtung nach Anspruch 8, wobei das Zeitverwaltungsmittel (TMM) eine Zeitverwaltungseinheit (TMM1, TMM2, ..., TMMk) für jeden der Ports (P1, P2, ..., Pk) innerhalb des Netzwerknotens (S1-S4) zum Überwachen der primären und sekundären Daten (ISOC, BE) umfasst, die über die Empfangsporteinheit (RX$_1$, RX$_2$, ..., RX$_k$) des Ports (P1, P2, ..., Pk) empfangen werden.

10. Elektronische Vorrichtung nach Anspruch 8 oder 9, wobei
jeder der zumindest einen Netzwerkknoten (S1-S4) ein Zeitanzeigeregister (t[port]) zum Speichern von Informationen, die sich auf die relative Zeitposition eines Frames beziehen, der über die Empfangsporteinheit (RX$_1$, RX$_2$, ..., RX$_k$) empfangen wird, und eines Frames, der über die Sendeporteinheit (TX$_1$, TX$_2$, ..., TX$_k$) gesendet wird, für jeden der zumindest einen Ports (P1, P2, ..., Pk) und zum Aktualisieren der Zeitanzeigeinformationen für jeden Port (P1, P2, ..., Pk) entsprechend zumindest den primären und/oder sekundären Daten (ISOC; BE), die über die Empfangsporteinheit (RX$_1$, RX$_2$, ..., RX$_k$) des zumindest einen Ports (P1, P2, ..., Pk) empfangen werden, umfasst.

11. Verfahren zur Frame-Synchronisierung innerhalb einer elektronischen Vorrichtung mit mehreren funktionellen Einheiten (1-10) zum Kommunizieren von zumindest primären und sekundären Daten (ISOC; BE) auf der Basis von Frames (FR), die jeweils in eine Anzahl von Zeitschlitzen (SL) unterteilt sind; und zumindest einem Netzwerkknoten (S1-S4) zum Koppeln funktioneller Einheiten (1-10) mit zumindest einem Port (P1, P2, ..., PK) mit einer verknüpften Empfangsporteinheit (RX$_1$, RX$_2$, ..., RX$_k$), umfassend die Schritte:

Empfangen von zumindest primären und sekundären Daten (ISOC; BE) von einer der mehreren funktionellen Einheiten (1-10) in einer von zumindest einer ersten Taktdomäne durch eine Empfangsporteinheit (RX$_1$, RX$_2$, ..., RX$_k$), die mit dem zumindest einen Port (P1, P2, ..., PK) verknüpft ist; und

Senden von zumindest primären und sekundären Daten (ISOC; BE) zu einer anderen der mehreren funktionellen Einheiten (1-10) in einer von zumindest einer zweiten Taktdomäne durch eine Sendeporteinheit (TX$_1$, TX$_2$, ..., TX$_k$), die mit dem zumindest einen Port (P1, P2, ..., PK) verknüpft ist;

wobei sich die zumindest eine zweite Taktdomäne von der zumindest einen ersten Taktdomäne unterscheidet;

**gekennzeichnet durch** die Ausführung in zumindest einem Netzwerkknoten der Schritte:

Speichern von Informationen, die sich auf die relative Zeitposition eines Frames beziehen, der über die Empfangsporteinheit (RX$_1$, RX$_2$, ..., RX$_k$) empfangen wird, die mit einem von zumindest einem Port (P1, P2, ..., Pk) verknüpft ist, und eines Frames, der über die Sendeporteinheit (TX$_1$, TX$_2$, ..., TX$_k$) gesendet wird, die mit dem einem von zumindest einem Port (P1, P2, ..., Pk) verknüpft ist, in einem Zeitanzeigeregister (t [port]);

Aktualisieren des Zeitanzeigeregisters (t [port]) entsprechend den zumindest primären und/oder sekundären Daten (ISOC; BE), die über die Empfangsporteinheit (RX$_1$, RX$_2$, ..., RX$_k$) empfangen wird, die mit dem einem von zumindest einem Port (P1, P2, ..., Pk) verknüpft ist;

Überwachen der zumindest primären und/oder sekundären Daten (ISOC; BE), die über den Empfangsport (RX$_1$, RX$_2$, ..., RX$_k$)

empfangen werden, der mit dem einem von zumindest einem Port (P1, P2, ..., Pk) verknüpft ist, in einer der zumindest einen ersten Taktdomäne **durch** ein Zeitgeberverwaltungsmittel (TMM); und

Pausieren der Sendung zumindest der primären Daten (ISOC) über die Sendeporteinheit (TX$_1$, TX$_2$, ..., TX$_k$), die mit dem einem von zumindest einem Port (P1, P2, ..., Pk) verknüpft ist, in einer der zumindest einen zweiten Taktdomäne, wenn der Wert des Zeitanzeigeregisters einen vorbestimmten Schwellenwert übersteigt,

wobei eine Sendung von sekundären Daten (BE) von dem Zeitgeberverwaltungsmittel (TMM) selbst dann freigegeben wird, wenn das Senden der primären Daten (ISOC) pausiert wird.

12. Mobile Vorrichtung, umfassend die elektronische Vorrichtung nach Anspruch 1.

13. Datenverarbeitungssystem, umfassend die elektronische Vorrichtung nach Anspruch 1.

**Revendications**

1. Dispositif électronique, comprenant :

une pluralité d'unités fonctionnelles (1 à 10) pour communiquer au moins des données primaires et secondaires (ISOC ; BE) en se basant sur des trames (FR), chacune étant divisée en un certain nombre de tranches de temps (SL) ;

au moins un noeud de réseau (S1 à S4) pour relier des unités fonctionnelles (1 à 10), comprenant au moins un point d'accès (P1, P2, ..., Pk) ayant une unité de point d'accès de récepteur associée (RX1, RX2, ..., RXk) pour recevoir au moins des données primaires et secondaires (ISOC ; BE) en provenance d'une unité de la pluralité d'unités fonctionnelles (1 à 10) dans l'un d'au moins un premier domaine d'horloge ; et une unité de point d'accès d'émetteur associée (TX1, TX2, ..., TXk) pour émettre au moins des données primaires et secondaires (ISOC ; BE) vers une autre unité de la pluralité d'unités fonctionnelles (1 à 10) dans l'un d'au moins un second domaine d'horloge ;

l'au moins un second domaine d'horloge étant différent de l'au moins un premier domaine d'horloge ;

**caractérisé en ce que** l'au moins un noeud de réseau comprend

un registre d'indication de temps (t[port]) pour stocker des informations se rapportant à la position de temps relative d'une trame reçue par l'unité de point d'accès de récepteur (RX1, RX2, ..., RXk) associée à l'un de l'au moins un point d'accès (P1, P2, ..., Pk) et d'une trame émise par l'unité de point d'accès d'émetteur (TX1, TX2, ..., TXk) associée à l'un de l'au moins un point d'accès (P1, P2, ..., Pk), dans lequel le registre d'indication de temps (t[port]) est mis à jour selon au moins les données primaires et/ou secondaires (ISOC ; BE) reçues par l'unité de point d'accès de récepteur (RX1, RX2, ..., RXk) associée à l'un de l'au moins un point d'accès (P1, P2, ..., Pk) ; et **en ce qu** l'au moins un noeud de réseau comprend

un moyen de gestion de minuterie (TMM) pour contrôler les données au moins primaires et secondaires (ISOC ; BE) reçues par le point d'accès de récepteur (RX1, RX2, ..., RXk) associé à l'un de l'au moins un point d'accès (P1, P2, ..., Pk) dans l'un de l'au moins un premier domaine d'horloge et pour mettre en pause l'émission d'au moins les données primaires (ISOC) par l'unité de point d'accès d'émetteur (TX1, TX2, ..., TXk) associée à l'un de l'au moins un point d'accès (P1, P2, ..., Pk) dans l'un de l'au moins un second domaine d'horloge, si la valeur du registre d'indication de temps dépasse un seuil prédéterminé, dans lequel le moyen de gestion de temps (TMM) est conçu pour valider une émission de données secondaires (BE) même si l'émission des données primaires (ISOC) est mise en pause.

2. Dispositif électronique selon la revendication 1, dans lequel

le registre d'indication de temps (t[port]) est en outre mis à jour selon des paquets de type échappement (ESC TIME) reçus par les unités de point d'accès de récepteur (RX1, RX2, ..., RXk).

3. Dispositif électronique selon la revendication 1, dans lequel

la mise à jour du registre d'indication de temps (t[port]) et la mise en pause de l'émission peuvent être effectuées au niveau de frontières de mot ou au niveau de frontières de tranche.

4. Dispositif électronique selon la revendication 1, dans lequel

lesdites trames (FR) ont chacune une durée fixe prédéterminée.

5. Dispositif électronique selon la revendication 1, dans lequel

lesdites tranches (SL) ont chacune une taille fixe prédéterminée.

6. Dispositif électronique selon la revendication 5, dans lequel

la taille des tranches (SL) est conçue pour loger le plus grand paquet de données primaires (ISOC).

7. Dispositif électronique selon la revendication 5 ou 6, dans lequel

un paquet de données primaire (ISOC) commence à un début d'une tranche qui lui est réservée, et un paquet secondaire (BE) commence à un début d'une tranche non réservée ou au milieu d'une tranche, qui est au moins partiellement utilisée par des données primaires (ISOC).

8. Dispositif électronique selon la revendication 1, dans lequel

chaque noeud de l' au moins un noeud de réseau (S1 à S4) comprend un moyen de gestion de temps (TMM).

9. Dispositif électronique selon la revendication 8, dans lequel

le moyen de gestion de temps (TMM) comprend une unité de gestion de temps (TMM1, TMM2, ..., TMMk) pour chacun des points d'accès (P1, P2, ..., Pk) à l'intérieur du noeud de réseau (S1 à S4) pour contrôler les données primaires et secondaires (ISOC, BE) reçues par l'unité de point d'accès de récepteur (RX1, RX2, ..., RXk) du point d'accès (P1, P2, ..., Pk).

10. Dispositif électronique selon la revendication 8 ou 9, dans lequel

chaque noeud de l'au moins un noeud de réseau (S1 à S4) comprend un registre d'indication de temps (t[port]) pour stocker des informations se rapportant à la position de temps relative d'une trame reçue par l'unité de point d'accès de récepteur (RX1, RX2, ..., RXk) et d'une trame émise par l'unité de point d'accès d'émetteur (TX1, TX2, ..., TXk) pour chaque point de l' au moins un point d'accès (P1, P2, ..., Pk), et pour mettre à jour les informations d'indication de temps pour chaque point d'accès (P1, P2, ..., Pk) selon au moins les données primaires et/ou secondaires (ISOC ; BE) reçues par l'unité de point d'accès de récepteur (RX1, RX2, ..., RXk) de l'au moins un point d'accès (P1, P2, ..., Pk).

11. Procédé pour la synchronisation de trame à l'intérieur d'un dispositif électronique ayant une pluralité d'unités fonctionnelles (1 à 10) pour communiquer au moins des données primaires et secondaires (ISOC ; BE) en se basant sur des trames (FR), chacune étant divisée en un certain nombre de tranches de temps (SL) et au moins un noeud de réseau (S1 à S4) pour relier des unités fonctionnelles (1 à 10) ayant au moins un point d'accès (P1, P2, ..., Pk), comprenant les étapes de :

réception au moins de données primaires et secondaires (ISOC ; BE) en provenance d'une unité de la pluralité d'unités fonctionnelles (1 à 10) dans l'un d'au moins un premier domaine d'horloge par une unité de point d'accès de récepteur (RX1, RX2, ..., RXk) associée à l'au moins un point d'accès (P1, P2, ..., Pk) ; et

émission au moins de données primaires et secondaires (ISOC ; BE) vers une autre unité de la pluralité d'unités fonctionnelles (1 à 10) dans l'un de l'au moins un second domaine d'horloge par une unité de point d'accès d'émetteur (TX1, TX2, ..., TXk) associée à l'au moins un point d'accès (P1, P2, ..., Pk) ;

dans lequel l'au moins un second domaine d'horloge diffère de l'au moins un premier domaine d'horloge ;

**caractérisé par** l'exécution dans au moins un noeud de réseau des étapes de :

stockage d'informations se rapportant à la position de temps relative d'une trame reçue par l'unité de point d'accès de récepteur (RX1, RX2, ..., RXk) associée à l'un de l'au moins un point d'accès (P1, P2, ..., Pk) et d'une trame émise par l'unité de point d'accès d'émetteur (TX1, TX2, ..., TXk) associée à l'un de l'au moins un point d'accès (P1, P2, ..., Pk) dans un registre d'indication de temps (t [port]) ;

mise à jour du registre d'indication de temps (t[port]) selon au moins les données primaires et/ou secondaires (ISOC ; BE) reçues par l'unité de point d'accès de récepteur (RX1, RX2, ..., RXk) associée à l'un de l'au moins un point d'accès (P1, P2, ..., Pk) ;

contrôle des données au moins primaires et secondaires (ISOC ; BE) reçues par le point d'accès de récepteur (RX1, RX2, ..., RXk) associé à l'un de l'au moins un point d'accès (P1, P2, ..., Pk) dans l'un de l'au moins un premier domaine d'horloge par un moyen de gestion de minuterie (TMM) ; et

mise en pause de l'émission d'au moins les données primaires (ISOC) par l'unité de point d'accès d'émetteur (TX1, TX2, ..., TXk) associée à l'un de l'au moins un point d'accès (P1, P2, ..., Pk) dans l'un de l'au moins un second domaine d'horloge, si la valeur du registre d'indication de temps dépasse un seuil prédéterminé,

dans lequel une émission de données secondaires (BE) est validée par le moyen de gestion de minuterie (TMM) même si l'émission des données primaires (ISOC) est mise en pause.

12. Dispositif mobile comprenant le dispositif électronique selon la revendication 1.

13. Système de traitement de données comprenant le dispositif électronique selon la revendication 1.

# FIG. 1

FIG. 2

H     PL     TR

T L D S    0 1 2 3   0 1 2 3 4 5 6 7 8 9 10 11   124 125 126 127   0 1

CRC-16(1)   CRC-16(2)

SL

## FIG. 3

ISOC1    ISOC2    ISOC3    ISOC4

## FIG. 4

EP 1 894 370 B1

FIG. 5

FIG. 6

# FIG. 7

FIG. 8

```
                    ┌─────────────┐
                    │   receive   │⟍S90
                    │ ISOC packet │
                    └──────┬──────┘
                           │
                           ▼
     ┌───────────────────────────────────────────────┐
     │ isoc_word_count[port] = get_packet_length() │⟍S91
     └───────────────────────────────────────────────┘
                           │
                           ▼
     ┌───────────────────────────────────────────────────────────┐
     │ get_word()                                                 │
     │ isoc_word_count[port]−                                     │
     │ slot_word_count[port]−−                                    │⟍S92
     │ t[port] = (t[port] + word_duration[port]) % frame_duration │
     └───────────────────────────────────────────────────────────┘
                           │
                           ▼
                    ┌──────────┐
                    │ t[port] ⟩⟍S93
                    └──────────┘
                           │
              no           ▼
     ◄───────────◄ isoc_word_count[port] = 0 ⟩⟍S94
                           │ yes
                           ▼
                           ○
```

# FIG. 9

EP 1 894 370 B1

receive
BE packet —S100

S101

no    be_word_count[port] = 0    yes

S103

get_word()
be_word_count[port]—
slot_word_count[port]--
t[port] = (t[port] + word_duration[port]) % frame_duration

S102

be_word_count[port] = get_packet_length()

S104— t[port]

S105— slot_word_count[port] = 0    yes ◯

no

no    be_word_count[port] = 0    yes ◯

S106

# FIG. 10

EP 1 894 370 B1

```
          ┌─────────────┐
          │   pause,    │────S110
          │  BE packet  │
          └─────────────┘
                 │
                 ▼
┌──────────────────────────────────────────────┐
│ pause_word_count[port] = get_pause_length()  │────S111
└──────────────────────────────────────────────┘
                 │           ┌────S112
      no         ▼           │    yes
   ◁─────────⟨ be_word_count[port] = 0 ⟩─────────▷
   │                                             │
S114                                             │         S113
   │                                             ▼           │
   ▼                                   ┌──────────────────────────────────────┐
┌─────────────────────────┐           │ be_word_count[port] = get_packet_length() │◀───
│ get_word()              │◀──────────└──────────────────────────────────────┘   │
│ be_word_count[port]--   │                                                       │
│ pause_word_count[port]--│                                                       │
└─────────────────────────┘                                                       │
   │                                                                              │
   ▼                              yes                                             │
S115─⟨ pause_word_count[port] = 0 ⟩──────▷ ○                                      │
   │                                                                              │
   │ no                                                                           │
   ▼                              yes                                             │
   ⟨ be_word_count[port] = 0 ⟩────────────────────────────────────────────────────┘
   no │
   S116
```

## FIG. 11

```
            ┌──────┐
  S120─────(start )
            └──────┘
               │
               ▼
  S121─────▷┌────────┐      ┌─────────────────────────────────────┐
            │ t[port]│─────▶│ t_max_diff = max (t_max_diff, t - t[port]) │────S122
            └────────┘      └─────────────────────────────────────┘
               ▲                            │
               └────────────────────────────┘
```

$$t_{max\_diff} = \max (t_{max\_diff}, t - t[port])$$

## FIG. 12

start

$t_{max\_diff} = 0$ — S130

S131 — word_count = 0

S132 — wait for word_clock

S133 — $t$ += word_duration % frame_duration
word_count += word_duration

S134 — word_count < slot_duration?  yes

no

S135 — $t_{max\_diff} > t_{diff\_threshold}$
AND
$t_{max\_diff} <$ frame_duration/2  no

yes

S136 — $t_{pause} = 0$

S137 — wait for word_clock

S138 — $t_{pause}$ += word_duration
Do not send ISOC data.

yes  $t_{pause} < t_{max\_diff}$  no
S139

# FIG. 13

FIG. 14

start

$t_{max\_diff} = 0$ — S150

wait for word_clock — S151

S152 — $t \mathrel{+}= word\_duration \% frame\_duration$

$t_{max\_diff} > t_{diff\_threshold}$
AND
$t_{max\_diff} < frame\_duration/2$ — S153

no

yes

$t_{pause} = 0$ — S154

wait for word_clock — S155

$t_{pause} \mathrel{+}= word\_duration$
Do not send ISOC data. — S156

no

$t_{pause} < t_{max\_diff}$ — S157

yes

S158 — $t_{max\_diff} = 0$

# FIG. 15

FIG. 16

start

$t_{max\_diff} = 0$ — S170

S171 — word_count = 0

S172 — wait for base_word_clock

S173 — $t \mathrel{+}= base\_word\_duration \% frame\_duration$
word_count += base_word_duration

S174 — word_count < base_slot_duration ?    yes

no

S175 — $t_{max\_diff} > t_{diff\_threshold}$
AND
$t_{max\_diff} < frame\_duration/2$    no

yes

S176 — $t_{pause} = 0$

S177 — wait for base_word_clock

S178 — $t_{pause} \mathrel{+}= base\_word\_duration$
Do not send ISOC data.

yes    $t_{pause} < t_{max\_diff}$    no
S179

# FIG. 17

start

$t_{max\_diff} = 0$ —S180

S181— word_count[port] = 0

S182— wait for word_clock[port]

S183— $t$ += word_duration % frame_duration
word_count[port] += word_duration[port]

S184— word_count[port] < slot_duration ?          yes

no

S185— $t_{max\_diff}$[port] > $t_{diff\_threshold}$
AND
$t_{max\_diff}$[port] < frame_duration/2          no

yes

S186— $t_{pause}$[port] = 0

S187— wait for word_clock[port]

S188— $t_{pause}$[port] += word_duration[port]
Do not send ISOC data.

yes          $t_{pause}$[port] < $t_{max\_diff}$[port]          no
S189—

# FIG. 18

start

$t_{max\_diff} = 0$ ——S190

S191——( wait for base_word_clock )

S192——| $t$ += base_clock_period % frame_duration |

$t_{max\_diff} > t_{diff\_threshold}$
AND
$t_{max\_diff} < frame\_duration/2$ ——S193

yes

no

$t_{pause} = 0$ ——S194

( wait for base_word_clock )——S195

S196——| $t_{pause}$ += base_clock_period
Do not send ISOC data. |

no          $t_{pause} < t_{max\_diff}$          yes
S197——

# FIG. 19

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DIELISSEN J et al.** Concepts and Implementation of the Philips Network-on-Chip. *INTERNET CITATION,* 13 November 2003

- Combined Asynchronous/ Synchronous Packet Switching Architecture: QoS Guarantees for Integrated Parallel Computing and Real-Time Traffic. **OFEK Y. et al.** JOURNAL OF PARALLEL AND DISTRIBUTED COMPUTING. ELSEVIER, March 2000, vol. 60, 275-295